# EUROPÄISCHE PATENTANMELDUNG

(11) **EP 4 131 685 A1**
(43) Veröffentlichungstag der Anmeldung: **08.02.2023**
(21) Anmeldenummer: 21189702.0
(22) Anmeldetag: 04.08.2021
(51) Int. Cl.: H02G 3/06, H02G 3/04, F16L 3/26

(54) **VERBINDBARE KABELKANALEINHEIT UND KABELKANAL**

(71) Anmelder: Zurecon AG, 9053 Teufen AR (CH)
(72) Erfinder: Gerster, Alexander, 8006 Zürich (CH)
(74) Vertreter: Rutz & Partner

(57) **Zusammenfassung**

Die verbindbare Kabelkanaleinheit (1A) umfasst ein Bodenelement (11), das parallel zu einer Mittelachse (x) der Kabelkanaleinheit (1A) verläuft und beidseitig mit Seitenstücken (12) verbunden ist, und an beiden Enden der Kabelkanaleinheit (1A) vorgesehene Endstücken (5), die je mit einem Endstück (5) einer benachbarten Kabelkanaleinheit (1B) verbindbar sind. Erfindungsgemäss ist vorgesehen, dass die beiden Endstücke (5) der Kabelkanaleinheit (1A) zumindest annähernd identisch ausgebildet und um 180° gegeneinander gedreht sind und je eine erste Kopplungsplatte (51A) und eine zweite Kopplungsplatte (51B) aufweisen, die entlang der Mittelachse (x) durch einen Mittelspalt (515) seitlich voneinander getrennt und derart ausgebildet sind, dass sie über oder unter eine dazu korrespondierende zweite Kopplungsplatte (51B) oder erste Kopplungsplatte (51A) der benachbarten Kabelkanaleinheit (1B) verschiebbar sind und die mit ersten Kopplungselementen (510, 511) versehen sind, die zum Eingriff in dazu korrespondierende erste Kopplungselemente (510, 511) der Kopplungsplatten (51B, 51A) der benachbarten Kabelkanaleinheit (1B) vorgesehen sind.

## Beschreibung

Die Erfindung betrifft eine verbindbare Kabelkanaleinheit sowie einen Kabelkanal mit mehreren miteinander verbundenen Kabelkanaleinheiten.

In Gewerbe-, Industrie- und Verwaltungsgebäuden sowie in Tunnelbauten werden Kabel, insbesondere Kabel für Stark- und Schwachstromnetze, Leitungen und Rohre, infolge fehlender Eigenstabilität oft in metallene Kabelbahnen, wie Kabelkanäle oder Kabelpritschen, eingelegt und so z.B. von einem Schaltfeld oder einer Zentrale zu den Verbrauchern geführt. Kabelbahnen dieser Art, die aus einzelnen Kabelbahnabschnitten zusammengesetzt werden, sind z.B. aus dem Produktkatalog der LANZ OENSINGEN AG, Juli 2017, bekannt. Zur Verbindung der Kabelbahnabschnitte sind Vorrichtungen verwendbar, die ebenfalls in diesem Produktekatalog beschrieben sind.

Aus der DE202009004970U1 ist eine Anordnung mit mechanisch miteinander verbindbaren, gleichartig aus Metall gefertigten Kabelkanaleinheiten bekannt, die erste Verbindungsmittel und davon unabhängige zweite Verbindungsmittel aufweist. Die ersten Verbindungsmittel dienen der Erstellung einer den statischen Anforderungen genügenden Verbindung. Die zweiten Verbindungsmittel dienen der zusätzlichen mechanischen und elektrischen Verbindung der Kabelkanaleinheiten. Jede Kabelkanaleinheit umfasst an einem Ende einen ersten Verbindungsabschnitt, der mit einem zweiten Verbindungsabschnitt einer zweiten Kabelkanaleinheit verbindbar ist, und am anderen Ende einen zweiten Verbindungsabschnitt der mit einem ersten Verbindungsabschnitt einer dritten Kabelkanaleinheit verbindbar ist.

Der erste Verbindungsabschnitt ist an einem ersten Ende einer Kabelkanaleinheit durch eine die Querschnittsfläche der Kabelkanaleinheit vergrössernde Verkröpfung gebildet, die der Aufnahme eines unverkröpften zweiten Verbindungsabschnitts geeignet ist, die an einem zweiten Ende einer weiteren Kabelkanaleinheit vorgesehen ist. Ein erster und ein zweiter Verbindungsabschnitt sind somit ineinander verschiebbar und durch Rastelemente und Riegelelemente arretierbar.

Die beiden Verbindungsabschnitte jeder Kabelkanaleinheit sind komplementär zueinander aber unterschiedlich ausgebildet, weshalb der Installation eines Kabelkanals darauf zu achten ist, dass die Kabelkanaleinheiten jeweils mit den passenden Verbindungsabschnitten gegeneinander ausgerichtet werden. Da Kabelkanäle in der Regel an einer Gebäudedecke eines noch nicht fertig gestellten Gebäudes montiert werden, erfolgt der Aufbau der Kabelkanäle normalerweise unter erschwerten Bedingungen. Einerseits stehen die Monteure typischerweise auf Leitern oder Plattformen, weshalb sie in der Bewegungsfreiheit behindert sind und primär auf ihre Sicherheit achten müssen. Andererseits ist die Raumbeleuchtung normalerweise mangelhaft, weshalb der Monteur die Verbindungsabschnitte einer gehaltener Kabelkanaleinheit oft nicht voneinander unterscheiden kann. Die Installation eines Kabelkanals mit solchen Kabelkanaleinheiten ist daher oft mit Schwierigkeiten verbunden.

Die Montage der weiteren Verbindungsmittel zur Erstellung eines guten elektrischen Kontakts ist zudem mit weiterem Aufwand verbunden.

Die Verbindungsabschnitte der Kabelkanaleinheiten der DE202009004970U1 werden mit einer Montagebewegung in einer Richtung quer zur Längserstreckung der Kabelkanaleinheiten miteinander verbunden. Es ist somit erforderlich, dass der Monteur die Verbindungsabschnitte übereinander hält und in eine präzise gegenseitige Ausrichtung bringt, um diese in der Folge ineinander verschieben zu können. Ferner erfordert das Anheben der zu verbindenden Kabelkanaleinheit Kraft und Geschick. Da die zu verbindende Kabelkanaleinheit kaum horizontal ausgerichtet angehoben werden kann, können beim Verbinden ein Verkanten und Blockieren auftreten. Der Monteur muss daher eine Position exakt an der Verbindungsstelle einnehmen, um den Verbindungsvorgang bei guten Lichtverhältnissen überwachen und mit dem notwendigen Geschick ausführen zu können. Zu diesem Zweck sind gegebenenfalls eine Bühne an die betreffende Position zu verschieben und eine helle Beleuchtung vorzusehen.

Der vorliegenden Erfindung liegt daher die Aufgabe zugrunde, eine verbesserte verbindbare Kabelkanaleinheit sowie einen verbesserten Kabelkanal mit solchen Kabelkanaleinheiten zu schaffen.

Die Kabelkanaleinheiten sollen auch unter schwierigen Raumverhältnissen und Lichtverhältnissen in einfacher Weise zusammengesetzt werden können, sodass die zu installierende Kabelbahn rasch und ohne Gefährdung des Personals aufgebaut werden kann.

Der Vorgang zur Verbindung der Kabelkanaleinheiten soll mit einer einfachen linearen Bewegung einer Kabelkanaleinheit ausgeführt werden können. Ein Anheben einer Kabelkanaleinheit soll nach Möglichkeit vermieden werden.

Vorzugsweise soll beim Zusammenbau von zwei Kabelkanaleinheiten nicht nur eine stabile mechanische Verbindung sondern, gegebenenfalls mit einfachen Mitteln, auch eine gute elektrische Verbindung resultieren.

Die Kabelkanaleinheiten sollen einfach aufgebaut sein und mit geringem Aufwand gefertigt werden können.

Die Verbindung der Kabelkanaleinheiten soll ohne den Einsatz von Schrauben möglich sein.

Diese Aufgabe wird mit einer verbesserten verbindbaren Kabelkanaleinheit gemäss Anspruch 1 und einem verbesserten Kabelkanal gemäss Anspruch 15 gelöst. Vorteilhafte Ausgestaltungen der Erfindung sind in weiteren Ansprüchen angegeben.

Die verbindbare Kabelkanaleinheit umfasst ein Bodenelement, das parallel zu einer Mittelachse der Kabelkanaleinheit verläuft und beidseitig mit Seitenstücken verbunden ist, und an beiden Enden der Kabelkanaleinheit vorgesehene Endstücken, die je mit einem Endstück einer benachbarten Kabelkanaleinheit verbindbar sind.

Erfindungsgemäss ist vorgesehen, dass die beiden Endstücke der Kabelkanaleinheit zumindest annähernd identisch ausgebildet und um 180° gegeneinander gedreht sind und je eine erste Kopplungsplatte und eine zweite Kopplungsplatte aufweisen, die entlang der Mittelachse durch einen Mittelspalt seitlich voneinander getrennt und derart ausgebildet sind, dass sie über oder unter eine dazu korrespondierende zweite Kopplungsplatte oder erste Kopplungsplatte der benachbarten Kabelkanaleinheit verschiebbar sind und die mit ersten Kopplungselementen versehen sind, die zum Eingriff in dazu korrespondierende erste Kopplungselemente der Kopplungsplatten der benachbarten Kabelkanaleinheit vorgesehen sind.

Die Endstücke sind somit bezüglich der Mittelachse asymmetrisch ausgebildet und umfassen einen ersten Teil auf einer Seite der Mittelachse und einen zweiten Teil auf der anderen Seite der Mittelachse. Nach einer Drehung eines zweiten Endstücks gegenüber einem ersten Endstück um 180° liegen sich somit auf einer Seite der Mittelachse der Kabelbahn der erste Teil des ersten Endstücks und der zweite Teil des zweiten Endstücks und auf der anderen Seite der Mittelachse der Kabelbahn der zweite Teil des ersten Endstücks und der erste Teil des zweiten Endstücks gegenüber.

Die zur Verbindung der Kabelkanaleinheiten vorgesehenen Endstücke sind vorzugsweise identisch, können in der Ausgestaltung aber voneinander abweichen, soweit dies die Verbindbarkeit nicht beeinträchtigt.

Da die beiden Endstücke der Kabelkanaleinheit identisch, aber um 180° gegeneinander gedreht sind, können Endstücke benachbarter Kabelkanaleinheiten unabhängig von der Ausrichtung der Kabelkanaleinheiten stets in einfacher Weise miteinander verbunden werden. Die einander zugewandten Endstücke sind nicht nur komplementär zueinander, sondern auch identisch, sodass beidseits der Mittelachse je eine erste Kopplungsplatte und eine zweite Kopplungsplatte überlappen können. Bei der Verbindung von zwei Kabelkanaleinheiten ist es somit nicht mehr notwendig, auf die Art der einander zugewandten Endstücke und die Ausrichtung der Kabelkanaleinheiten zu achten und eine falsch ausgerichtete Kabelkanaleinheit gegebenenfalls zu drehen.

Von besonderer Bedeutung ist der im Bodenelement entlang der Mittelachse verlaufende Mittelspalt, der es erlaubt, die Kabelkanaleinheiten ineinander zu verschieben.

Die Verbindung von zwei Kabelkanaleinheiten erfolgt in einfacher Weise, in dem die koaxial zueinander ausgerichteten Endstücke ineinander verschoben werden oder indem die Endstücke entlang der Mittelachse gegeneinander geneigt gegeneinander geschoben und gekoppelt werden, wonach zur Erstellung der Verbindung die zweite Kabelkanaleinheit gegen die erste Kabelkanaleinheit gedreht wird. Die Kopplung der Kabelkanaleinheiten erfolgt, indem das Bodenelement der ersten Kabelkanaleinheit in den Mittelspalt des Bodenelements der zweiten Kabelkanaleinheit und das Bodenelement der zweiten Kabelkanaleinheit in den Mittelspalt des Bodenelements der ersten Kabelkanaleinheit geschoben wird. In einfacher Weise resultiert somit eine Verbindung zwischen den Kabelkanaleinheiten, die Durchdrehung der zweiten Kabelkanaleinheit abgeschlossen werden kann.

Die Kanaleinheiten können somit entlang ihrer Längsachse gegeneinander verschoben und miteinander gekoppelt und vorzugsweise verrastet werden. Ein Anheben einer der Kabelkanaleinheiten ist somit nicht erforderlich, weshalb der Installationsvorgang wesentlich erleichtert wird. Die miteinander zu verbindenden Kabelkanaleinheiten werden auf Ausleger aufgelegt, koaxial gegeneinander ausgerichtet und in der Folge ineinander verschoben. Dieser Schiebevorgang kann bequem und ohne Kraftaufwand ausgeführt werden. Da lediglich die Kabelkanaleinheiten koaxial zueinander auszurichten sind, ist es nicht erforderlich die exakte gegenseitige Position von Kopplungselementen übereinander zu ermitteln, weshalb sich grössere Freiheiten für den Monteur ergeben, der den Verbindungsvorgang auch mit etwas grösserem Abstand von der Verbindungsstelle durchführen kann. Da die beiden Kabelkanaleinheiten und nicht übereinander liegende Kopplungselemente gegeneinander auszurichten sind, gelingt der Verbindungsvorgang problemlos auch bei mangelhaften Lichtverhältnissen, bei denen kleinere Kopplungselemente nur schlecht sichtbar sind.

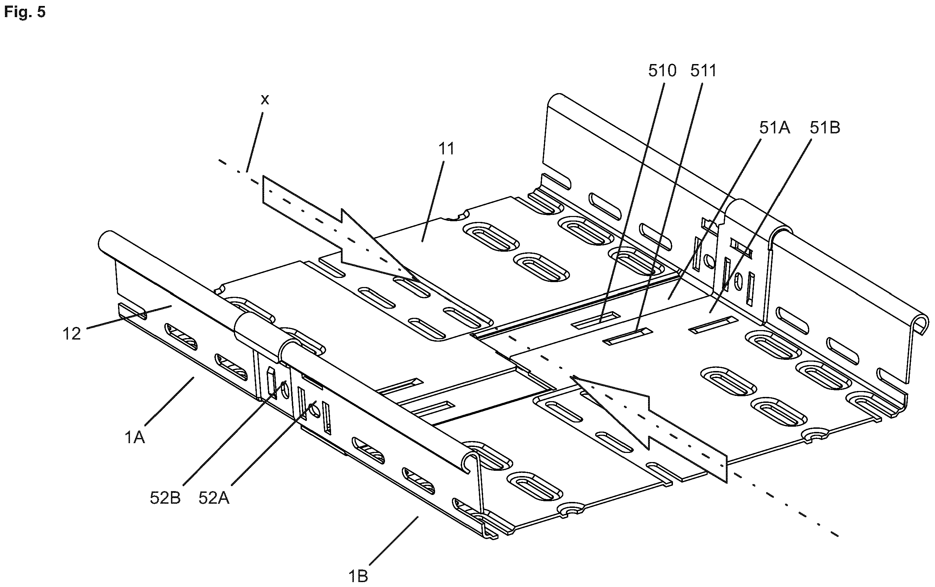

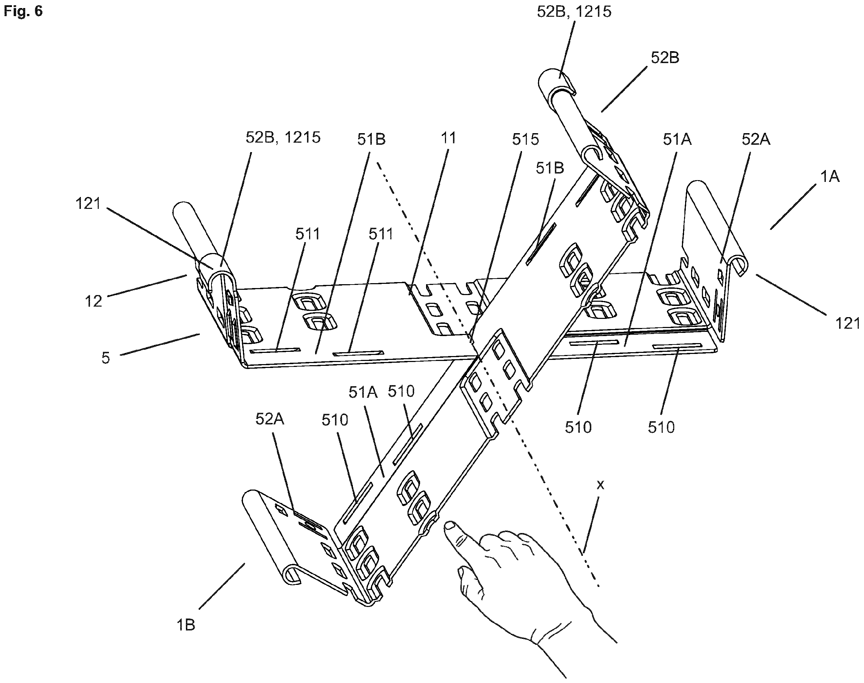

Beide Verbindungsarten, die Verbindung durch axiale Verschiebung sowie die Verbindung durch axiale Verschiebungen Drehung, können vom Monteur in einfacher Weise realisiert werden. Mit Bezug zu Fig. 5 wird die Verbindung der Kabelkanaleinheiten durch axiale Verschiebung und mit Bezug auf Fig. 6 wird die Verbindung der Kabelkanaleinheiten durch axiale Verschiebung und Drehung beschrieben.

Erfindungsgemässe Kabelkanaleinheiten können daher auch unter erschwerten Bedingungen, beispielsweise bei schlechten Lichtverhältnissen auf einer Leiter stehend, problemlos miteinander verbunden werden.

Es können verschiedene Massnahmen vorgesehen werden, die gewährleisten, dass zueinander korrespondierende Kopplungsplatten von einander zugewandten Endstücken von zwei Kabelkanaleinheiten übereinander oder untereinander gegeneinander verschiebbar sind und bei axialer Ausrichtung der zu verbindenden Kabelkanaleinheiten nicht stirnseitig aufeinandertreffen. Vorzugsweise sind die erste Kopplungsplatte und die zweite Kopplungsplatte mit Bezug zum Bodenelement in der Höhe gegeneinander verschoben. Alternativ oder zusätzlich kann vorgesehen werden, dass wenigstens eine der Kopplungsplatten zumindest teilweise geneigt oder gebogen ausgebildet ist. Besonders bevorzugt wird vorgesehen, dass die erste Kopplungsplatte, die bei der Verbindung von zwei Kabelkanaleinheiten unter die zweite Kopplungsplatte der benachbarten Kabelkanaleinheit verschiebbar ist, ganz oder zumindest frontseitig nach unten gebogen ist. Das gebogene Teil der erste Kopplungsplatte liegt in diesem Fall an der Unterseite des Bodenelements und gerät nicht in Kontakt mit Kabeln, die in den Kabelkanal eingelegt werden. Durch Biegung z.B. eines frontseitigen Endstücks der Kopplungsplatten wird bewirkt, dass die Endstücke benachbarter Kabelkanaleinheiten praktisch selbstführend ineinander verschoben werden können.

In einer vorzugsweisen Ausgestaltung ist vorgesehen, dass die beiden Endstücke der Kabelkanaleinheit, je ein erstes Abschlussstück des einen Seitenstücks und ein zweites Abschlussstück des anderen Seitenstücks aufweisen, die komplementär zueinander ausgebildet sind und zueinander komplementäre zweite Kopplungselemente aufweisen. Die Seitenstücke der Kabelkanaleinheit sind beispielsweise als Wände ausgebildet. Es ist hingegen auch möglich Kabelkanaleinheiten in anderer Ausgestaltung der Seitenstücke miteinander zu verbinden. In der Ausgestaltung als Seitenwände können die Abschlussstücke besonders vorteilhaft realisiert werden.

Nach der Kopplung von benachbarten Kabelkanaleinheiten, bei der jeweils die beidseits der Mittelachse zueinander korrespondierenden ersten und zweiten Abschlussstücke seitlich nebeneinander liegen, greifen die Kopplungselemente ineinander ein.

Auf diese Weise erfolgt eine Kopplung benachbarter Kabelkanaleinheiten jeweils am Boden und an den Seitenstücken oder Seitenwänden. Nach der Verbindung von zwei Kabelkanaleinheiten resultiert daher ein einheitlicher Kabelkanal. Die Kopplungsstellen sind kaum sichtbar.

Die Verbindung der Seitenstücke erlaubt zudem eine präzises, zumindest ansatzweise geführtes gegeneinander Schieben der Kopplungsplatten mit Verbinden oder Einrasten der Kopplungselemente.

In einer weiteren vorzugsweisen Ausgestaltung ist vorgesehen, dass die Kopplungsplatten und/oder die Abschlussstücke zueinander korrespondierende, vorzugsweise längs und quer zueinander ausgerichtete Montageöffnungen aufweisen, durch die hindurch ein Verbindungselement, wie eine Verbindungsschraube, führbar ist, um eine mechanische und elektrische Verbindung zu erstellen. Beispielsweise wird eine Rundkopfschraube von der Kanalinnenseite durch die Montageöffnungen der sich überlappenden Kopplungsplatten und/oder Abschlussstücke geführt und mittels einer Schraubenmutter fixiert. Mit einer einzigen Verbindungsschraube kann die mechanische und elektrische Verbindung der Kabelkanaleinheiten somit gesichert werden. Vorzugsweise wird die Verbindung beidseitig gesichert.

Der abgerundete Kopf der Rundkopfschraube, der innerhalb des Kanalquerschnitts an der Innenseite der Seitenwand oder des Bodens anliegt, bildet dabei kein Hindernis für eingelegte Kabel.

Die ersten und/oder zweiten Kopplungselemente sind vorzugsweise Rastelemente, wie Öffnungen und darin verankerbare Nocken oder Haken. Beim gegeneinander Schieben der Kabelkanaleinheiten wird eine Rastverbindung vorzugsweise automatisch erstellt. Diese Rastverbindung kann gelöst werden, in dem die Kopplungsplatten angehoben oder die Abschlussstücke voneinander getrennt werden. Vorzugsweise ist wenigstens eines der zueinander korrespondierenden Kopplungselemente mit einer Auflauframpe versehen, welche erlaubt, die Kopplungselemente einfach ineinander zu verschieben, bis der Rastvorgang abgeschlossen ist. Die Auflauframpen steigen in Richtung der Längsachse in den Kabelkanaleinheiten an und greifen beim gegeneinander Schieben der Endstücke vorzugsweise mit einer Keilkante unter oder über die benachbarte Kopplungsplatte.

Die Kopplungsplatten bilden vorzugsweise elastische Rastzungen, die beim gegeneinander Schieben der Kabelkanaleinheiten gebogen werden, bis die Kopplungselemente einrasten können.

Vorzugsweise wird wenigstens eine der Kopplungsplatten durch einen Spalt vom zugehörigen, gegebenenfalls wandförmigen Seitenstück getrennt. Durch die beidseitige Freilegung der Kopplungsplatten erlangen diese daher eine gewünschte Flexibilität.

Die ersten und/oder zweiten Kopplungselemente sind vorzugsweise derart ausgerichtet, dass sie eine gegenseitige Verschiebung miteinander verbundener Kabelkanaleinheiten entlang der Mittelachse oder geneigt dazu verhindern. Vorzugsweise ist wenigstens ein erstes Kopplungselement vorgesehen, welches Zugkräfte parallel zur Mittelachse aufnehmen kann. Weiterhin wird vorzugsweise wenigstens ein zweites Kopplungselement vorgesehen, welches eine Kraft senkrecht zur Mittelachse aufnehmen kann und die Verbindung der Kabelkanaleinheiten sichert.

Vorzugsweise sind die Kopplungselemente als Schlitzöffnungen und dazu passende balkenförmige Nocken ausgebildet. Die entsprechenden Kopplungsöffnungen werden vorzugsweise ausgestanzt und die z.B. balkenförmigen Nocken werden seitlich freigeschnitten und ausgebogen. Kopplungselemente können in beliebiger Weise realisiert werden. Vorzugsweise werden diese in das Material der Kabelkanaleinheit eingearbeitet. Die Endstücke können hingegen auch mit gesondert gefertigten Kopplungselementen versehen werden.

Die Seitenstücke oder Seitenwände der Kabelkanaleinheiten weisen an der vom Bodenelement abgewandten Seite vorzugsweise nach aussen gerollte Randstücke auf, die im Bereich des ersten Abschlussstücks und des zweiten Abschlussstücks komplementär zueinander ausgebildet sind und unterschiedliche Abmessungen aufweisen, so dass die Randstücke zueinander korrespondierender erster und zweiter Abschlussstücke ineinander verschoben werden können.

Bei der Fertigung der Kabelkanaleinheit werden die Kopplungsplatten und/oder die Abschlussstücke vorzugsweise durch Formvorgänge und/oder Stanzvorgänge gefertigt. Die Kabelkanaleinheit kann daher vorteilhaft aus einem entsprechend zugeschnittenen Blechstück gefertigt werden.

Durch Neigung und/oder konische Erweiterung der Kopplungsplatten und/oder der Abschlussstücke, gegebenenfalls der Randstücke, die bei der Fertigung leicht vollzogen werden kann, wird die Verbindbarkeit bzw. Steckbarkeit der Kabelkanaleinheiten vorteilhaft erhöht.

Das Bodenelement und/oder die Seitenstücke der Kabelkanaleinheit sind vorzugsweise mit Lochungen versehen, die eine Lüftung und Kühlung der im Kabelkanal verlegten Kabel erlauben.

Nachfolgend wird die Erfindung anhand von Zeichnungen näher erläutert. Dabei zeigt:
- Fig. 1: zwei voneinander getrennte erfindungsgemässe Kabelkanaleinheiten 1A, 1B und zwei dazu identische miteinander verbundene Kabelkanaleinheiten 1A, 1B, die ein Bodenelement 11, das parallel zu einer Mittelachse x verläuft und beidseitig mit Seitenstücken bzw. Seitenwänden 12 verbunden ist, und an beiden Enden je ein Endstück 5 aufweisen, das mit einem beliebigen Endstück 5 einer benachbarten erfindungsgemässen Kabelkanaleinheit 1A; 1B verbindbar ist;
- Fig. 2a: die einander zugewandten Endstücke 5 der voneinander getrennten Kabelkanaleinheiten 1A, 1B von Fig. 1, die identisch ausgebildet sind und je zwei in der Höhe gegeneinander verschobene und durch einen entlang der Mittelachse x verlaufenden Mittelspalt 515 voneinander getrennte Kopplungsplatten 51A, 51B aufweisen;
- Fig. 2b: die einander zugewandten und miteinander verbundenen Endstücke 5 der Kabelkanaleinheiten 1A, 1B von Fig. 1, mit den übereinander liegenden und miteinander gekoppelten Kopplungsplatten 51A, 51B;
- Fig. 3: die einander zugewandten Endstücke 5 der voneinander getrennten Kabelkanaleinheiten 1A, 1B von Fig. 2a in vergrösserter Darstellung;
- Fig. 4a: Teile der einander zugewandten Endstücke 5 der voneinander getrennten Kabelkanaleinheiten 1A, 1B von Fig. 3 in weiter vergrösserter Darstellung;
- Fig. 4b: die Teile der einander zugewandten Endstücke 5 der voneinander getrennten Kabelkanaleinheiten 1A, 1B von Fig. 4a von der anderen Seite gesehen;
- Fig. 4c: die miteinander verbundenen Teile der einander zugewandten Endstücke 5 der Kabelkanaleinheiten 1A, 1B von Fig. 4b;
- Fig. 5: die Endstücke 5 der Kabelkanaleinheiten 1A, 1B von Fig. 2a beim Vorgang der Verbindung durch koaxiale gegenseitige Ausrichtung und axiale Verschiebung; und
- Fig. 6: die Endstücke 5 der Kabelkanaleinheiten 1A, 1B von Fig. 2a beim Vorgang einer Verbindung durch koaxiale Ausrichtung, Kopplung und Drehung.

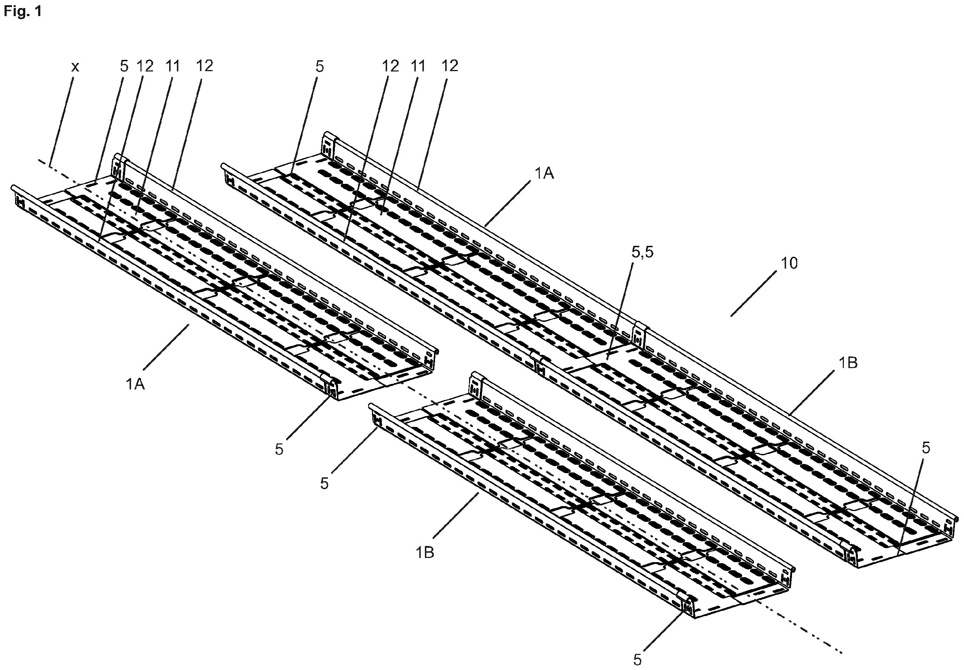

Fig. 1a zeigt in einer vorzugsweisen Ausgestaltung links zwei voneinander getrennte erfindungsgemässe Kabelkanaleinheiten 1A, 1B und rechts zwei dazu identische miteinander verbundene Kabelkanaleinheiten 1A, 1B. Die Kabelkanaleinheiten 1A, 1B umfassen ein Bodenelement 11, das parallel zu einer Mittelachse x verläuft und beidseitig mit Seitenstücken in der Ausgestaltung von Seitenwänden 12 verbunden ist. An beiden Enden weist jede Kabelkanaleinheit 1A, 1B ein Endstück 5 auf, das mit einem beliebigen Endstück 5 einer benachbarten erfindungsgemässen Kabelkanaleinheit 1B verbindbar ist. Eine erste Kabelkanaleinheit 1A kann daher mit einer beliebig ausgerichteten zweiten Kabeleinheit 1B verbunden werden.

Die Verbindung der zwei Kabelkanaleinheiten 1A, 1B erfolgt in einfacher Weise, in dem die korrekt zueinander ausgerichteten Endstücke 5 ineinander verschoben werden oder indem die Endstücke 5 entlang der Mittelachse x gegeneinander geneigt gegeneinander geschoben und gekoppelt werden, wonach zur Erstellung der Verbindung die zweite Kabelkanaleinheit 1B gegen die erste Kabelkanaleinheit 1A gedreht wird.

Beide Verbindungsarten können vom Monteur in einfacher Weise realisiert werden. Nachstehend wird zuerst die Verbindung der Kabelkanaleinheiten 1A, 1B durch ineinander Verschieben und anschliessend, mit Bezug auf Fig. 5 die Verbindung durch ineinander Verschieben und Drehen beschrieben.

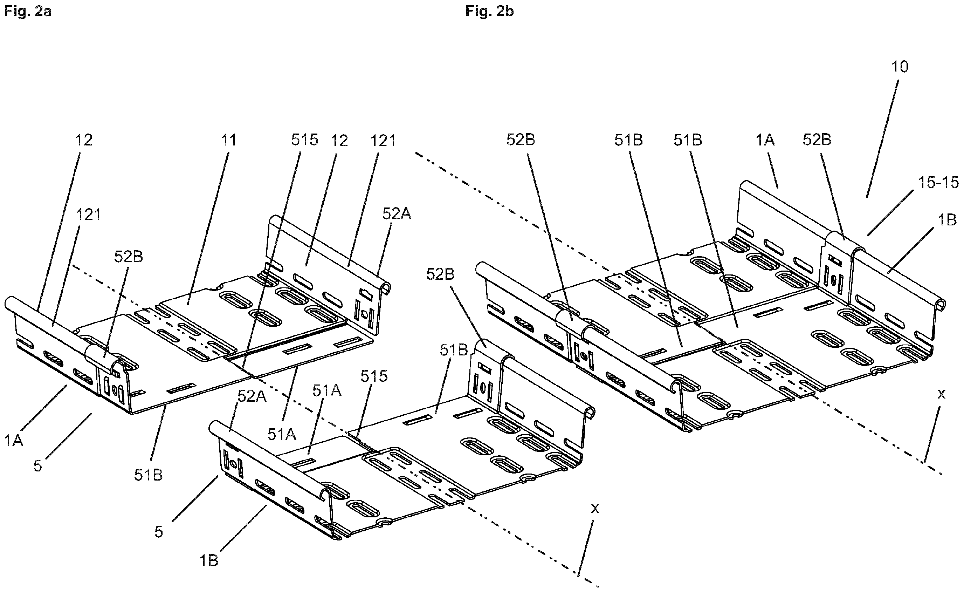

Fig. 2a zeigt die einander zugewandten Endstücke 5 der voneinander getrennten Kabelkanaleinheiten 1A, 1B von Fig. 1. Die beiden Endstücke 5 der Kabelkanaleinheiten 1A, 1B sind identisch ausgebildet und um 180° gegeneinander gedreht und umfassen je eine erste Kopplungsplatte 51A und eine zweite Kopplungsplatte 51B. Konsequenterweise sind auch die Endstücke 5 jeder Kabelkanaleinheit 1A bzw. 1B untereinander um 180° gegeneinander gedreht.

Die Kopplungsplatten 51A, 51B sind entlang der Mittelachse x durch einen Mittelspalt 515 seitlich voneinander getrennt und mit Bezug zum Bodenelement 11 in der Höhe gegeneinander verschoben. Die Kopplungsplatten 51A, 51B sind in der Höhe derart gegeneinander verschoben, dass sie mit geringem Abstand oder praktisch spielfrei aneinander vorbeigeschoben werden können oder beim Verschiebevorgang gegebenenfalls elastisch gebogen werden.

Vorzugsweise werden die gegeneinander gerichteten frontseitigen Endstücke 516 wenigstens einer Kopplungsplatte 51A, 51B um eine Neigungsachse, die senkrecht zur Mittelachse x verläuft, geneigt oder gebogen, sodass die Kopplungsplatten 51A, 51B gegeneinander fahren können, ohne stirnseitig anzustossen. Unter Druck werden die Kopplungsplatten 51A, 51B nach oben und nach unten verdrängt und legen nach dem Einrasten der Kopplungselemente vorzugsweise mit einer Andruckkraft aneinander an. Auf diese Weise wird die Verbindung der Kopplungselemente zuverlässig gesichert.

Vorzugsweise ist wenigstens eine der Kopplungsplatten 51A, 51B elastisch ausgebildet, sodass sie eine Rastzunge bildet, die zurückgebogen werden kann, bis sie einrastet.

Die beiden Endstücke 5 der Kabelkanaleinheit 1A weisen zudem je ein erstes Abschlussstück 52A an einem Seitenstück bzw. einer Seitenwand 12 und ein zweites Abschlussstück 52B am anderen Seitenstück bzw. der anderen Seitenwand 12 der Kabelkanaleinheit 1A auf. Die Abschlussstücke 52A, 52B sind komplementär zueinander bzw. komplementär zu korrespondierenden Abschlussstücken 52B, 52A der benachbarten Kabelkanaleinheit 1B ausgebildet und weisen zueinander komplementäre zweite Kopplungselemente 520, 521 auf, die nach der Kopplung von benachbarten Kabelkanaleinheiten 1A; 1B, bei der jeweils die beidseits der Mittelachse x zueinander korrespondierenden ersten und zweiten Abschlussstücke 52A, 52B seitlich nebeneinander liegen, ineinander eingreifen.

Fig. 2b zeigt die einander zugewandten und miteinander verbundenen Endstücke 5 der Kabelkanaleinheiten 1A, 1B von Fig. 1, mit den übereinander liegenden und miteinander gekoppelten Kopplungsplatten 51A, 51B. Es ist ersichtlich, dass die zweiten Kopplungsplatten 51B die erste Kopplungsplatten 51B überdecken. Weiterhin ist ersichtlich, dass die zweiten Abschlussstücke 52B, die ersten Abschlussstücke 52B überdecken.

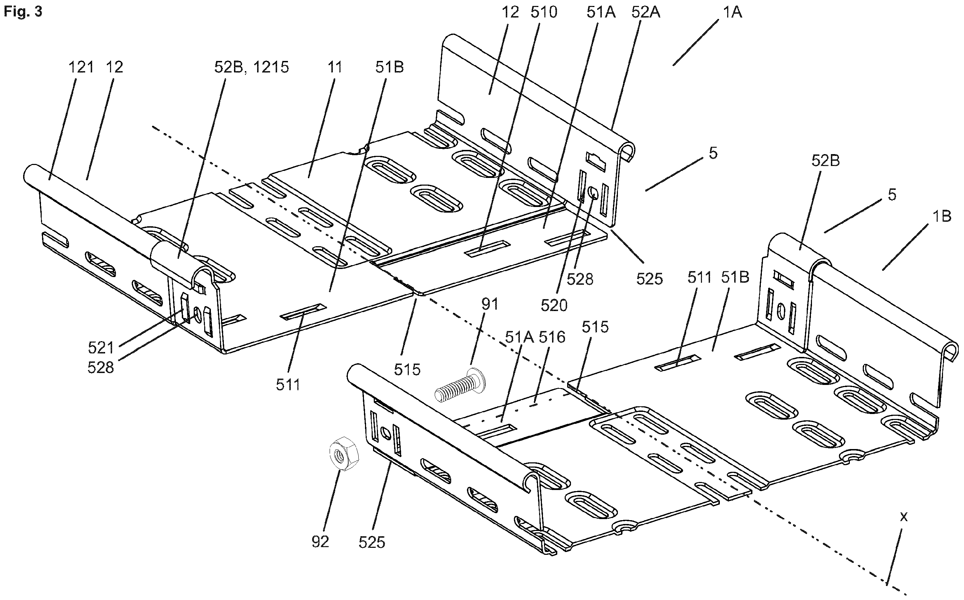

Fig. 3 zeigt die einander zugewandten Endstücke 5 der voneinander getrennten Kabelkanaleinheiten 1A, 1B von Fig. 2a in vergrösserter Darstellung.

Es ist ersichtlich, dass die Kopplungsplatten 51A, 51B bzw. 51B, 51A der Endstücke 5 der beiden Kabelkanalabschnitte 1A, 1B zueinander korrespondierende erste Kopplungselemente 510, 511 aufweisen. In der ersten Kopplungsplatte 51A sind Längsöffnungen 510 vorgesehen, in die balkenförmige Rastelemente 511 eintreten können, die aus der zweiten Kopplungsplatte 51B ausgeschnitten und ausgebogen sind. Die Kopplungselemente 510, 511 sind quer zur Mittelachse x ausgerichtet, um hohe Zugkräfte entlang der Mittelachse x aufnehmen zu können.

Auch die Abschlussstücke 52A, 52B weisen mehrere Kopplungselemente 520, 521 auf, die ineinander einrasten können. Im ersten Abschlussstück 52A sind zwei senkrecht zur Mittelachse x ausgerichtete Längsöffnungen 520 vorgesehen, in die balkenförmige Rastelemente 521 eintreten können, die aus dem zweiten Abschlussstück 52B ausgeschnitten und ausgebogen sind. Durch diese Kopplungselemente 520, 521 werden wiederum Zugkräfte aufgenommen, die parallel zur Mittelachse x wirken. Ferner weist das erste Abschlussstück 52A eine parallel zur Mittelachse x verlaufende Längsöffnung auf, in die ein aus dem zweiten Abschlussstück 52B ausgeschnittenes und ausgebogenes Rastelement 521 einrasten kann. Durch diese parallel zur Mittelachse x ausgerichteten Kopplungselemente 520, 521 werden senkrecht zur Mittelachse x einwirkende Kräfte aufgefangen. Dadurch wird verhindert, dass sich die ersten Kopplungselemente 510, 511 voneinander lösen können.

Damit die zueinander korrespondierenden Abschlussstücke 52A, 52B aneinander vorbei geführt werden können, ist das zweite Abschlussstück 52B bezüglich der Mittelachse x seitlich gegenüber dem zugehörigen Seitenstück 12 verschoben und frontseitig gegebenenfalls leicht geneigt.

Fig. 3 zeigt weiter, dass die beiden Seitenstücke 12 nach aussen gerollte, zumindest annähernd zylindrische Randstücke 121 aufweisen, die im Bereich des ersten Abschlussstücks 52A und des zweiten Abschlussstücks 52B komplementär zueinander ausgebildet sind und unterschiedliche Abmessungen aufweisen. Die Randstücke 121, 1215 der zueinander korrespondierenden Abschlussstücke 52A, 52B von zwei benachbarten Kabelkanaleinheiten 1A, 1B können daher ineinander verschoben werden. In der vorliegenden Ausgestaltung ist das Randstück 1215 des zweiten Abschlussstücks 52B aufgeweitet, sodass das unveränderte Randstück 121 des ersten Abschlussstücks 52A darin eingeführt werden kann. Vorzugsweise ist das Randstück 1215 des zweiten Abschlussstücks 52B konisch aufgeweitet, sodass die Kopplung einfach gelingt.

Weiter ist in Fig. 3 gezeigt, dass die Abschlussstücke 52A, 52B zueinander korrespondierende Montageöffnungen 528 aufweisen, die leicht oval ausgebildet und senkrecht bzw. horizontal ausgerichtet sind, um Toleranzen zu kompensieren. Durch diese Montageöffnungen 528 können Verbindungsmittel, wie die gezeigte Verbindungsschraube 91 geführt werden, die mit einer Schraubenmutter 92 verbunden wird. Die Verbindungsschraube 91 weist einen Rundkopf auf, der an der Innenseite des Seitenstücks bzw. der Seitenwand 12 anliegt und für eingelegte Kabel kein Hindernis bildet. Beim Einziehen der Kabel kann der Kabelmantel daher nicht verletzt werden.

Sofern eine der Kopplungsplatten 51A, 51B gebogen werden soll und/oder eine erhöhte Flexibilität aufweisen und beispielsweise als Rastzunge dienen soll, so wird sie vorzugsweise beidseitig durch einen Schnitt, den Mittelspalt 515 und einen Seitenspalt 525 freigelegt, welcher das Bodenelement 11 und das Seitenstück bzw. die Seitenwand 12 voneinander trennt. Die metallene erste Kopplungsplatte 51A kann daher gebogen werden und weist zudem eine erhöhte Flexibilität auf.

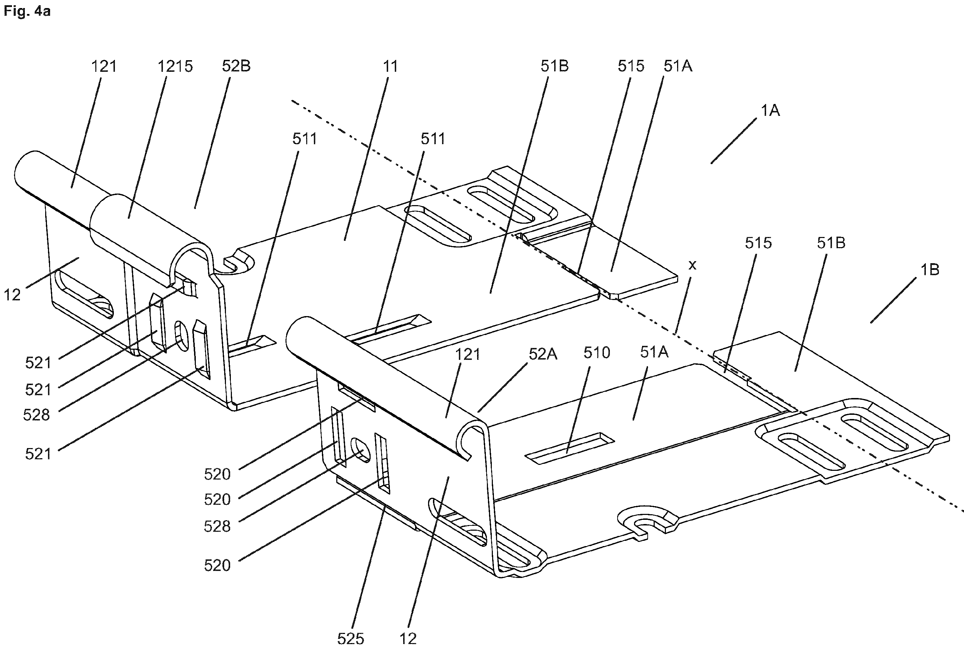

Fig. 4a zeigt Teile der einander zugewandten Endstücke 5 der voneinander getrennten Kabelkanaleinheiten 1A, 1B von Fig. 3 in weiter vergrösserter Darstellung. Die Einformung des zweiten Abschlussstücks 52B mit der Ausformung bzw. Erweiterung des Randstücks 1215 ist besonders gut sichtbar. Weiterhin ist der Mittelspalt 515 gut sichtbar, der die Kopplungsplatten 51A, 51B voneinander trennt.

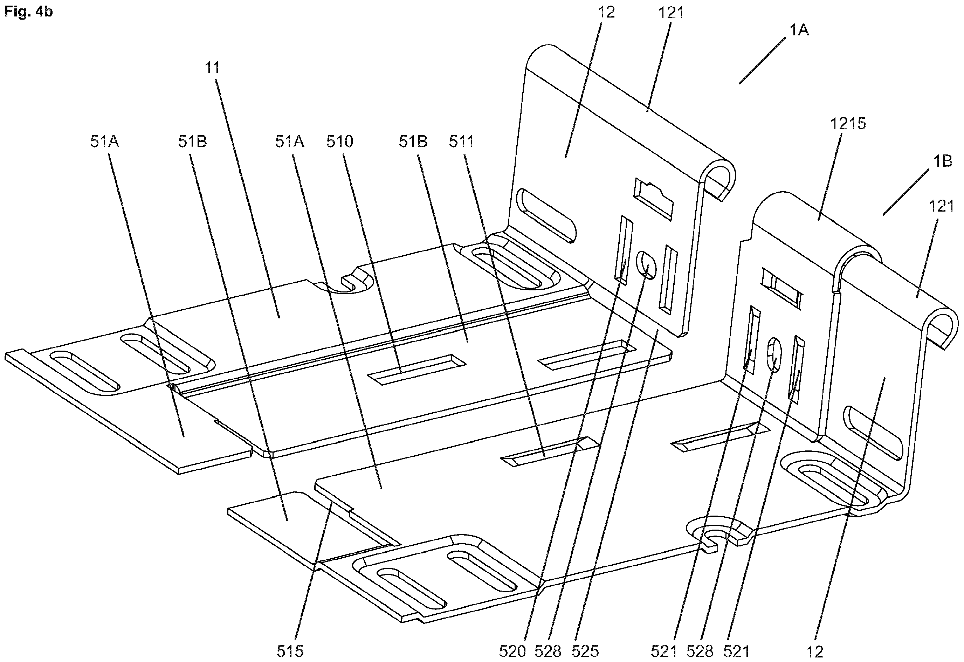

Fig. 4b zeigt die Teile der einander zugewandten Endstücke 5 der voneinander getrennten Kabelkanaleinheiten 1A, 1B von Fig. 4a von der anderen Seite gesehen.

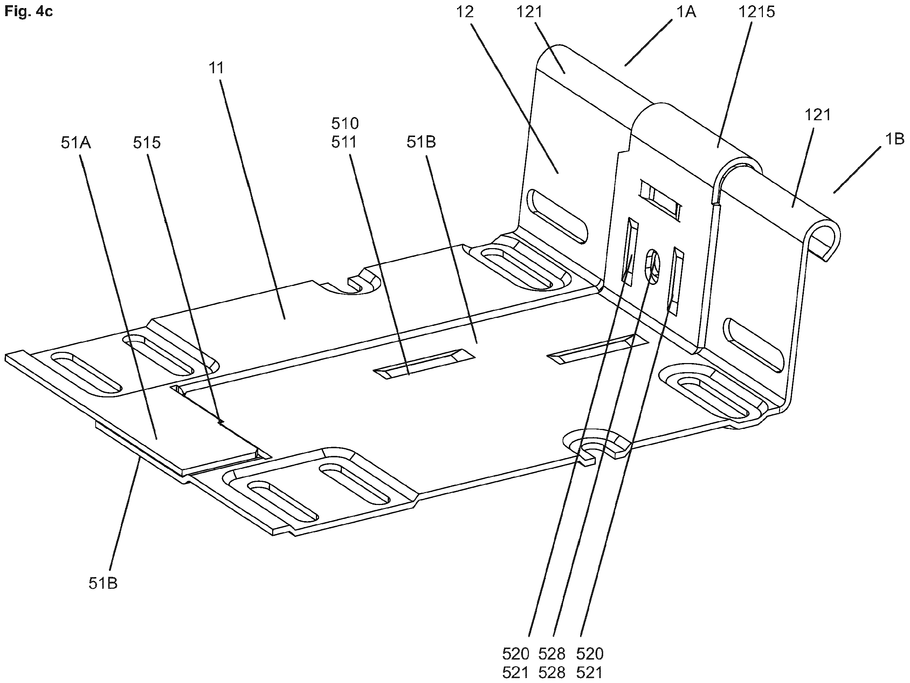

Fig. 4c zeigt die miteinander verbundenen Teile der einander zugewandten Endstücke 5 von Fig. 4b. Es ist sichtbar, wie die Kopplungsplatten 51A, 51B übereinander liegen und die ersten und zweiten Kopplungselemente 510, 511; 520, 521 ineinander eingreifen. Ferner ist die koaxiale Ausrichtung der Montageöffnungen 528 sichtbar.

Fig. 5 zeigt die Endstücke 5 der Kabelkanaleinheiten 1A, 1B von Fig. 2a beim Vorgang der Verbindung durch koaxiale gegenseitige Ausrichtung und axiale Verschiebung. Die Kopplungsplatten 51A, 51B sind bereits teilweise übereinander verschoben. Das Kopplungselement 511 ist vorzugsweise keilförmig als Rastelement ausgebildet und weist vorzugsweise eine Auflauframpe auf, die verhindert, dass es an der Kopplungsplatte 51A anschlagen kann. Stattdessen wird es von der Kopplungsplatte 51A während des Verschiebevorgangs nach oben verdrängt, bis es in das als Schlitzöffnung ausgebildete Kopplungselement 510 einrasten kann. Die beiden Kabelkanaleinheiten 1A, 1B liegen bei der Installation auf Auslegern auf und können somit mit einer einfachen Linearbewegung gegeneinander verschoben und miteinander gekoppelt werden. Kraft ist lediglich erforderlich, um die Kabelkanaleinheiten 1A, 1B gegeneinander zu verschieben.

Fig. 6 zeigt die koaxial zur Mittelachse x ausgerichteten, aber gegeneinander getreten Endstücke 5 der Kabelkanaleinheiten 1A, 1B von Fig. 2a beim Vorgang der Verbindung der Kabelkanaleinheiten 1A, 1B. Der erste Schritt des Verbindungsvorgangs, nämlich die Kopplung der Endstücke 5 wurde bereits vollzogen. Dazu wurde das Bodenelement 11 der ersten Kabelkanaleinheit 1A in den Mittelspalt 515 des Bodenelements 11 der zweiten Kabelkanaleinheit 1B und das Bodenelement 11 der zweiten Kabelkanaleinheit 1B axial in den Mittelspalt 515 des Bodenelements 11 der ersten Kabelkanaleinheit 1A geschoben. In einfacher Weise resultiert somit eine Verbindung zwischen den Kabelkanaleinheiten 1A, 1B, die durch Drehung der zweiten Kabelkanaleinheit 1B im Uhrzeigersinn abgeschlossen werden kann.

Die Länge des Mittelspalts 515 der Endstücke 5 ist vorzugsweise derart gewählt, dass die Endstücke 5 so weit gegeneinander verschiebbar sind, dass bei Erreichen des Anschlags die Kopplungselemente 510, 511; 520, 521 korrekt zueinander ausgerichtet sind. Damit die Kopplung der Endstücke 5 leicht möglich ist, kann der Mittelspalt 515 sich von aussen nach innen verjüngen und beispielsweise v-förmig ausgebildet sein.

Bei Erreichen des Anschlags liegen die Anschlagpunkte daher auf der Mittelachse x. In der Folge ist nur noch eine Drehung der Kabelkanaleinheit 1B erforderlich, die mit einer Hand bequem ausgeführt werden kann.

Die zueinander korrespondierenden Randstücke 121 der Abschlussstücke 52A, 52B sind vorzugsweise federelastisch ausgebildet, sodass sie ineinander verschiebbar sind und als Verschlusselemente dienen. Das äussere Rauschen 121 umklammert federelastisch das innere Randstück 121, weshalb sich die Kabelkanaleinheiten 1A, 1B nicht mehr selbsttätig voneinander lösen können.

In Fig. 6 ist die zweite Kabelkanaleinheit 1B etwa um 45° gegenüber der ersten Kabelkanaleinheit 1A geneigt. Bei der Installation genügt jedoch eine geringe Neigung der zweiten Kabelkanaleinheit 1B um einen spitzen Winkel von z.B. 5° bis 15°, um die gegen die erste Kabelkanaleinheit 1 A verschieben zu können, ohne dass die Seitenstücke bzw. Seitenwände 12 kollidieren. Sofern die optionalen Randstücke 121 vorgesehen sind, ist der Neigungswinkel etwas höher als in Fällen, in denen die Seitenwände 12 Ebene Platten sind.

Dieser Verbindungsvorgang ist etwas anspruchsvoller als der Verbindungsvorgang, bei dem eine reine axiale Verschiebung der Kabelkanaleinheiten 1A, 1B erfolgt. Hingegen resultiert der grosse Vorteil, dass durch die Kopplung bezüglich des Mittelspalts 515 der Endstücke 5 der Kabelkanaleinheiten 1A, 1B ein fixer Drehpunkt resultiert, weshalb bei der Drehung der zweiten Kabelkanaleinheit 1B die Verbindung zwangsgeführt erfolgt.

Die Erfindung ist für beliebige Kabelführungsvorrichtungen, wie die genannten Kabelkanäle, einsetzbar, soweit diese Kabelführungsvorrichtungen ein Bodenelement aufweisen, an dem Kopplungsplatten erfindungsgemäss realisierbar sind.

## Patentansprüche

1. Verbindbare Kabelkanaleinheit (1A) mit einem Bodenelement (11), das parallel zu einer Mittelachse (x) der Kabelkanaleinheit (1A) verläuft und beidseitig mit Seitenstücken, gegebenenfalls Seitenwänden (12) verbunden ist, und mit an beiden Enden der Kabelkanaleinheit (1A) vorgesehenen Endstücken (5), die je mit einem Endstück (5) einer benachbarten Kabelkanaleinheit (1B) verbindbar sind, **dadurch gekennzeichnet, dass** die beiden Endstücke (5) der Kabelkanaleinheit (1A) zumindest annähernd identisch ausgebildet und um 180° gegeneinander gedreht sind und je eine erste Kopplungsplatte (51A) und eine zweite Kopplungsplatte (51B) aufweisen, die entlang der Mittelachse (x) durch einen Mittelspalt (515) seitlich voneinander getrennt und derart ausgebildet sind, dass sie über oder unter eine dazu korrespondierende zweite Kopplungsplatte (51B) oder erste Kopplungsplatte (51A) der benachbarten Kabelkanaleinheit (1B) verschiebbar sind und die mit ersten Kopplungselementen (510, 511) versehen sind, die zum Eingriff in dazu korrespondierende erste Kopplungselemente (510, 511) der Kopplungsplatten (51B, 51A) der benachbarten Kabelkanaleinheit (1B) vorgesehen sind.

2. Kabelkanaleinheit (1A) nach Anspruch 1, **dadurch gekennzeichnet,**
a) **dass** die erste Kopplungsplatte (51A) und die zweite Kopplungsplatte (51B) mit Bezug zum Bodenelement (11) in der Höhe gegeneinander verschoben sind; und/oder
b) **dass** wenigstens eine der Kopplungsplatten (51A, 51B) zumindest teilweise geneigt oder gebogen ausgebildet ist; und/oder
c) **dass** die erste Kopplungsplatte (51A), die bei der Verbindung von zwei Kabelkanaleinheiten (1A, 1B) unter die zweite Kopplungsplatte (51B) der benachbarten Kabelkanaleinheit (1B) verschiebbar ist, ganz oder zumindest frontseitig nach unten gebogen ist.

3. Kabelkanaleinheit (1A) nach Anspruch 1 oder 2, **dadurch gekennzeichnet, dass** die beiden Endstücke (5) der Kabelkanaleinheit (1A), je ein erstes Abschlussstück (52A) des einen Seitenstücks (12) und ein zweites Abschlussstück (52B) des anderen Seitenstücks (12) aufweisen, die komplementär zueinander ausgebildet sind und zueinander komplementäre zweite Kopplungselemente (520, 521) aufweisen, die nach der Kopplung von benachbarten Kabelkanaleinheiten (1A; 1B), bei der jeweils die beidseits der Mittelachse (x) zueinander korrespondierenden ersten und zweiten Abschlussstücke (52A, 52B) seitlich nebeneinander liegen, ineinander eingreifen.

4. Kabelkanaleinheit (1A) nach Anspruch 1 oder 2, **dadurch gekennzeichnet, dass** wenigstens eines der Abschlussstücke (52A, 52B) bezüglich der Mittelachse (x) seitlich gegenüber dem zugehörigen Seitenstück (12) verschoben ist und/oder dass wenigstens eines der Abschlussstücke (52A, 52B) bezüglich der Mittelachse (x) seitlich gegenüber dem zugehörigen Seitenstück (12) verschoben und frontseitig geneigt ist.

5. Kabelkanaleinheit (1A) nach einem der Ansprüche 1 - 4, **dadurch gekennzeichnet, dass** die Kopplungsplatten (51A, 51B) und/oder die Abschlussstücke (52A, 52B) zueinander korrespondierende, vorzugsweise längs und quer zueinander ausgerichtete Montageöffnungen (528) aufweisen, durch die hindurch ein Verbindungselement, wie eine Verbindungsschraube (91), führbar ist, um eine mechanische und elektrische Verbindung zu erstellen.

6. Kabelkanaleinheit (1A) nach einem der Ansprüche 1 - 5, **dadurch gekennzeichnet, dass** die beiden Endstücke (5) der Kabelkanaleinheit (1A) derart ausgebildet sind, dass sie in einer Linearbewegung oder Rotationsbewegung je mit einem Endstück (5) der benachbarten Kabelkanaleinheit (1B) verbindbar sind.

7. Kabelkanaleinheit (1A) nach einem der Ansprüche 1 - 6, **dadurch gekennzeichnet, dass** die ersten und/oder zweiten Kopplungselemente (510, 511; 520, 521) Rastelemente, wie Öffnungen und darin verankerbare Nocken oder Haken sind, die vorzugsweise wenigstens eine Auflauframpe aufweisen und/oder dass die ersten und/oder zweiten Kopplungselemente (510, 511; 520, 521) derart ausgerichtet sind, dass sie eine gegenseitige Verschiebung miteinander verbundener Kabelkanaleinheiten (1A; 1B) entlang der Mittelachse (x) oder geneigt dazu verhindern.

8. Kabelkanaleinheit (1A) nach einem der Ansprüche 1 - 7, **dadurch gekennzeichnet, dass** die Seitenstücke (12) vorzugsweise nach aussen gerollte Randstücke (121) aufweisen, die im Bereich des ersten Abschlussstücks (52A) und des zweiten Abschlussstücks (52B) komplementär zueinander ausgebildet sind und unterschiedliche Abmessungen aufweisen, so dass die Randstücke (121) zueinander korrespondierender Abschlussstücke (52A, 52B) nach der Kopplung mit der benachbarten Kabelkanaleinheit (1A) ineinander eingreifen.

9. Kabelkanaleinheit (1A) nach einem der Ansprüche 1 - 8, **dadurch gekennzeichnet, dass** die Länge des Mittelspalts (515) der Endstücke (5) derart gewählt ist, dass die Endstücke (5) der Kabelkanaleinheiten (1A, 1B) so weit gegeneinander verschiebbar sind, dass bei Erreichen des Anschlags die Kopplungselemente (510, 511; 520, 521) korrekt zueinander ausgerichtet sind.

10. Kabelkanaleinheit (1A) nach einem der Ansprüche 1 - 9, **dadurch gekennzeichnet, dass** die Kopplungsplatten (51A, 51B) und/oder die Abschlussstücke (52A, 52B) durch Formvorgänge und/oder Stanzvorgänge geprägt sind.

11. Kabelkanaleinheit (1A) nach einem der Ansprüche 1 - 10, **dadurch gekennzeichnet, dass** wenigstens eine der Kopplungsplatten (51A, 51B) durch einen Seitenspalt (525) vom zugehörigen, gegebenenfalls wandförmigen Seitenstück (12) getrennt und vorzugsweise elastisch ausgebildet ist.

12. Kabelkanaleinheit (1A) nach einem der Ansprüche 1 - 11, **dadurch gekennzeichnet, dass** Kopplungsplatten (51A, 51B) und/oder die Abschlussstücke (52A, 52B), gegebenenfalls die Randstücke (121) endseitig geneigt oder gegebenenfalls konisch erweitert sind, so dass sie leicht miteinander koppelbar sind.

13. Kabelkanaleinheit (1A) nach einem der Ansprüche 1 - 12, **dadurch gekennzeichnet, dass** das Bodenstück (11) und/oder die Seitenstücke (12) mit Lochungen versehen sind.

14. Kabelkanaleinheit (1A) nach einem der Ansprüche 1 - 13, **dadurch gekennzeichnet, dass** die Kabelkanaleinheit (1A) aus einem Blechstück gefertigt ist.

15. Kabelkanal (1) mit wenigstens zwei miteinander verbundenen Kabelkanaleinheiten (1A, 1B) nach einem der Ansprüche 1 - 14.
